# EUROPEAN PATENT APPLICATION

(11) **EP 4 380 140 A1**
(43) Date of publication of application: **05.06.2024**
(21) Application number: 22210295.6
(22) Date of filing: 29.11.2022
(51) Int. Cl.: H04M 3/56, H04N 7/14

(54) **EYE CONTACT APPARATUS FOR VIDEOCONFERENCING**

(71) Applicant: EyeQ Europe B.V., 2613 EP Delft (NL)
(72) Inventor: Maass, Gert, 2613 EP Delft (NL); Sprokholt, Ed, 1016 EJ Amsterdam (NL)
(74) Representative: De Vries & Metman

(57) **Abstract**

An assembly (100) for videoconferencing comprises a display (205), a camera and an apparatus (300) removably mounted to the display (205) and in turn comprising a blind (301), a semi-transparent mirror (303), and a camera panel (305) determining a camera position and an imaging axis of the camera. In the apparatus (300) the blind (301), the mirror (303), and the camera panel (305) are arranged in a general Z-shape such that an imaging path is defined along the imaging axis and a reflection thereof by the mirror (303) in a direction away from the display (205) in a reflection plane, for, in use and comprising the camera mounted to the camera position and imaging axis in the assembly (100), simultaneous viewing the display (205) along a line of sight through the mirror (303) by a user and imaging the user by the camera along the imaging path wherein the viewing path and imaging path generally coincide on one side of the mirror (303). The mirror (303) has a normal and the apparatus is arranged to set the mirror normal and the imaging axis to each other at an angle in the reflection plane in a range from 35 to 44 degrees.

## Description

### TECHNICAL FIELD

The present disclosure relates to an assembly for video teleconferencing ("videoconferencing" for short) that allows eye contact between a local user of the apparatus on one end and a remote discussion partner at another end of a teleconference connection. The assembly comprises, in use, a display, a camera panel, a camera, a semi-transparent mirror, and a blind. The blind, mirror, and camera panel are arranged in general Z-shape for simultaneous viewing the display through the mirror by a user and imaging the user via reflection by the mirror, wherein the blind and camera panel substantially prevent reflections of ambient light into the mirror.

### BACKGROUND

It is a well-known problem in video conferences that a user tends to look at the face and into the eyes of a remote discussion partner displayed on the display, whereas the camera imaging the user is located outside the display so that the user does not look straight into the camera. As a consequence of the inherent misalignment of the actual gaze and the gaze recorded by the camera and displayed to the remote discussion partner, direct (virtual) eye contact between the respective discussion partners is prevented. This lack of eye contact obstructs the exchange and interpretation of visual signals that are sent by the eyes and face in regular face-to-face meetings and that complement the exchange of verbal signals. Impaired access to this visual information reduces mutual understanding, lowers user credibility, hinders intimacy, and may also contribute to video fatigue as users struggle to interpret the displayed visual signals. Another problem in videoconferencing is that the camera image of a user may be unflattering and/or convey unintended and unwanted messages to a discussion partner without the user being aware, as the user is not able to monitor the camera images that are being recorded of the user him/herself while at the same time also looking at the face of the remote discussion partner on the display. E.g. the user may appear to be distracted and/or addressing someone else than the remote discussion partner; if the camera image is taken from below the imaged user may appear aloof, and/or may seem to be looking over and/or overlook the discussion partner; if the camera image is taken from above the user may appear small and/or submissive to the remote discussion partner. A related problem is that image quality often deteriorates over time during a videoconference session due to slumping by the user in the chair, lowering the vertical position of the eyes of the user. As a result the eyes appear in the bottom half of the camera images and the shoulders may no longer be visible for the camera so the discussion partner receives less visual cues. Slumping also may make the user appear submissive and distracted in the images sent to the discussion partner.

Lack of eye contact, unflattering images and unintended visual signals hurt the effectiveness of videoconferencing in a wide range of contexts including sales, customer care, company meetings, recruitment interviews, medical consults, education, coaching, and online get-togethers among colleagues, family, or friends.

An assembly for videoconferencing is known from US patent 6,104,424 which discloses foldable eye contact components for a dual mode display, and which states: "The present invention permits a dual mode use of a display screen of which in one mode the display screen is accessible and in the second mode has placed in front of the display screen videoconferencing eye contact components. The invention utilizes a uniquely hinged folded eye contact component apparatus which permits in the major embodiment of the present invention all of the eye contact components including the partly silvered mirror to fold with more than a one-half rotational turn entirely over to the back side of the flat panel display completely out of view. The folded eye contact components are attachable to existing flat panel displays and also are illustrated built in as a part of the flat panel housing. The same hinged folding function is also demonstrated as being suspended separate from the monitor so that no attaching to the display is required. Additional embodiments include adaptations for portable computers, flexible partly silvered mirrors that can be rolled up as well as other unique embodiments."

However, the embodiments disclosed in US patent 6,104,424 are rather bulky and cumbersome to use. In addition, these embodiments do not nudge the user to align the assembly and the position of the eyes and the gaze direction throughout the video conference so that eye contact does in fact take place and the user is properly imaged by the camera without conveying unintended messages such as being distracted or submissiveness.

Moreover, presently most videoconferencing is done using laptop computers having a base portion comprising user input devices such as a keyboard, a cursor control (e.g. a trackpad), one or more connectors, etc. and having a display portion or "lid" hingingly connected to the base portion comprising a flat panel screen.

The embodiments disclosed in the above-referenced US patent 6,104,424 are not suitable with standard laptop computers.

Therefore, there remains a desire for improvements, e.g. with respect to one or more of improved alignment for delivering eye-contact, improved alignment for the purpose of capturing camera images of the user of high quality without unintended messages, reduced bulk of components, increased flexibility of use, improved use with laptop-form computers, and improved portability.

### SUMMARY

In view of the preceding, herewith are provided, in aspects, assemblies and apparatus as set out below and as specified in the appended claims.

An assembly for videoconferencing is provided comprising a display, a camera and an apparatus removably mounted to the display and in turn comprising a blind, a semi-transparent mirror, and a camera panel determining a camera position and an imaging axis of the camera, in particular comprising the camera and/or comprising a mount for mounting the camera to the camera position and determining the imaging axis.

The blind, the mirror, and the camera panel are arranged in a general Z-shape such that an imaging path is defined along the imaging axis and a reflection thereof by the mirror in a direction away from the display in a reflection plane, for, in use, simultaneous viewing the display along a viewing path through the mirror by a user and imaging the user by the camera along the imaging path. In use the assembly comprises the camera mounted to the camera position and imaging axis. The viewing path and imaging path may generally coincide on one side of the mirror.

The mirror has a normal and the apparatus is arranged to set the mirror normal and the imaging axis to each other at an angle in the reflection plane in a range from 35 to 44 degrees, preferably in a range from 39 to 43 degrees.

The display may be used for displaying any suitable image(s). E.g., the display may show the user and/or other information. In particular, the display may show a remote discussion partner. The display may be a flat panel display. The camera serves for imaging the user. The captured image(s) may be displayed, recorded, transmitted to a remote discussion partner for videoconferencing.

The semi-transparent mirror is configured to transmit an image from the display, e.g. transmitting at least part of light emitted from the display, and reflecting light toward the camera position.

Here, "semi-transparent" means that the mirror is both transparent for visible light, having a transmissibility T for visible light, and reflective for visible light, having a reflectivity R for visible light, such that both an image may be seen across the mirror and an image may be reflected by the mirror. The higher the transmissibility T, the better an image, and any details thereof, may be seen through the mirror. The higher the reflectivity R, the better the user's image may be reflected into the camera. The ratio T:R may be selected in relation to the light-sensitivity of the camera; a high-sensitivity camera may require less light for capturing an image suitable for presentation to a remote discussion partner than a low-sensitivity camera that may require a higher reflectivity for capturing more light. A suitable ratio of transmissibility T and reflectivity R of the mirror may be in a range of about T:R = 95:5 to 5:95, in particular about 90:10 - 10:90, preferably in a range of 80:20 - 20:80, such as about 75:25 - 25:75, about 70:30 - 30:70, about 60:40 - 40:60; or about 45:55-55:45 such as about 50:50, which may be preferred. The ratio T:R may be determined by a suitable choice of material. The material may comprise one or more layers and/or coatings arranged in and/or on a transparent panel of a material such as plastic or glass. Since transmissibility and/or reflectivity may be dependent on the angle of incidence of the light onto the mirror, the ratio T:R may be determined with respect to angles of incidence of light in operation, in particular an angle of incidence of light from the display onto the mirror along the viewing axis for transmissibility T, and the angle of incidence onto the mirror of light along the line of sight and/or along the imaging axis for reflectivity R.

The semi-transparent mirror allows simultaneous viewing of the display along the viewing path through the mirror by the user and imaging the user by the camera along the imaging path. By the configuration of the apparatus, the imaging path and the viewing path may generally overlap in the reflection plan. The mirror may be provided with a frame.

Thus, the user may look at the display and into the camera simultaneously through and via (reflection of) the mirror by virtue of partial transmission and partial reflection of light by the mirror along the (reflection of the) viewing path. As a result, in an image of the user viewing the display, the user may be shown looking into the camera and thus apparently looking at an observer of the image. Therefore, when using the assembly for videoconferencing, the remote discussion partner may perceive to have eye contact with the user. Preferably, both the user and the remote discussion partner use an assembly according to the present disclosure so that eye contact works both ways. Thus, more natural communication may be provided that may result in more effective communication by including the visual cues that eye contact provides. It is noted that the same goes for group discussions and group presentations where each participant may now experience eye contact with other participants. This also applies to live streams, recordings etc. made using the presently provided assembly, e.g. such as for a lecture: a person viewing a live stream and/or a recorded image / film made using the assembly may perceive to be directly addressed and experience a stronger involvement with the presentation. This may assist teachers in online lectures. The assembly may be used in conjunction with teleprompter software for reading text from the display while delivering eye contact to the audience.

It is noted that people generally experience eye contact when the gaze of the other person is directed at the eyes or slightly lower towards the nose and mouth, rather than upwards towards the forehead or higher. The present assembly and apparatus nudge the user to tilt the display into a position that allows comfortable visual access to the display and to direct the line of sight of the user so that the user's reflection in the mirror is directed at the lens of the camera or slightly below when the user looks at the eyes of the remote discussion partner on the display. As a result the user may appear to make eye contact with (all) the other participant(s) in the video conference while looking at the displayed eyes on the computer display. Moreover, the assembly and apparatus discourage slumping as this impairs visual access to the display. The user is thus properly imaged throughout the videoconferencing session without conveying distraction and/or submissiveness.

The camera panel and any blinds (see also below) reduce or prevent light incident on the mirror and/or camera which would reduce visibility of the desired images (display image viewed by the user and reflection of the user imaged by the camera, respectively). The camera panel and/or any blinds may preferably be one or more of opaque, coloured dark (e.g. black) towards the mirror, and have reduced reflectivity (e.g. being matte, provided with velvet etc.).

The camera panel determines a camera position and an imaging axis of the camera. Therewith, positioning the imaging path relative to the mirror and hence to the mirror normal is facilitated. The imaging axis may be normal to the camera panel or at least normal to a surface of the panel facing the mirror, which surface preferably is plane; the panel may be generally plane as a whole.

The camera panel may be provided with a foldable portion, e.g. a compliant and/or hinged portion, which can preferably be folded below or onto the main body of the camera panel when using the assembly. This reduces the bulk of the assembly, in particular reducing protrusion of the camera panel into the workspace of the user, and/or it facilitates proper imaging of the user by the camera, and/or it supports dimensions for the camera panel aligned with the dimensions of the mirror so the mirror can be fully covered by the camera panel in the folded position of the apparatus. Also or alternatively, a foldable portion, e.g. a compliant and/or hinged portion may be connected to a front end of the blind.

The camera may be integrated into the apparatus. This may increase user friendliness of the apparatus and of the assembly as a whole, e.g. with respect to the camera position and/or camera image axis. Also or alternatively, the camera mount may be configured to mount a separate and/or third-party camera, in particular being configured to mount a "webcam" and/or a mobile telephone comprising a camera to provide the camera of the assembly. It is preferred that, in use, the blind is positioned above the camera panel, and the camera being oriented with the imaging axis pointing upwards from the camera panel, so that the camera is "looking up". In case the display is part of a laptop computer, the camera may then generally "look away from" the keyboard.

The angle between the mirror normal and the imaging axis in the presently provided range allows reduction of volume of the apparatus relative to known devices and, more importantly, improves directing a user's gaze to the desired viewing and imaging paths as will be explained in more detail below.

The angle in the presently provided range has been found to provide significant improvements over arrangements wherein the imaging axis is parallel to the display or significantly angled towards the mirror and/or towards, or rather: into, the display.

Angles outside the presently provided range result in impaired camera images in terms of unattractive positioning of the user in the recorded images with the eyes in the lower half of the camera image, and/or the appearance of user submissiveness or of strong user dominance, and/or image pollution by including parts of the (reflection of) components of the assembly and/or other sources of image pollution.

Also, the presently provided range for the angle has been found to facilitate allowing access to the keyboard of laptop computers, also if, and in particular in case that, the apparatus is configured to fit to substantially the entire display so as to allow a user to view most of, preferably substantially all of the display screen (e.g. substantially all pixels), for average laptop computer users in average use conditions (laptop on a desk or table with the user sitting in front of the laptop, and/or laptop resting on the lap of a sitting user). The access may include operative access to a topmost row of keys of the keyboard (generally comprising function keys); "operative access" here meaning that the keys can be selected and pressed in regular fashion, and it may then allow visual access to these keys as well, benefitting users that cannot rely on touch typing (e.g. "blind typing").

Note that solutions according to US 6,104,424 discussed above require specific computer constructions having a detachable keyboard and/or they involve blocking access to the computers' keyboard when used with a portable computer such as a laptop. Such specifically constructed computer devices are not readily available. The disclosed solutions also hinder the use of critical functionalities of popular video platforms, in particular in modern-day videoconference and remote collaboration settings in which "screen sharing" and/or simultaneous modification of a single file by multiple users are commonplace. Functional access to a laptop's keyboard while videoconferencing is therefore highly desired, and that is facilitated or simplified with the present assembly as will also be explained in more detail below.

The imaging axis may be normal to the camera panel, but preferably extends at an enclosed angle to the camera panel normal in the reflection plane in a range of 1-5 degrees towards the display. This may support delivery of eye contact and is may assist providing a desired image composition of the user and/or unimpaired camera images of the user, in particular when the angle between the mirror normal and the imaging axis is about 39-43 degrees.

The display may define a display normal and the apparatus may be arranged to set the display normal and the mirror normal at an angle to each other in the reflection plane in a range from 30 to 45 degrees, preferably from 37 to 42 degrees.

Such angle allows reduction of protrusion of the mirror from the display compared to larger angles, thus reducing forward load on the display which facilitates balancing the assembly when used with a laptop computer. Yet such angle allows providing a proper viewing path and imaging path compared to larger or smaller angles, supporting eye contact and good camera images of the user.

It is noted that the angle between the display normal and the mirror normal and the angle between the mirror normal and the imaging axis may differ but may also be generally identical; then the mirror may generally extend along or parallel to a bisecting plane of an angle between the display normal and the imaging axis. This may be arranged by setting an enclosed angle between the display and the mirror substantially equal to an enclosed angle between the mirror and the camera panel. Such arrangement facilitates overlapping part of the viewing axis, which may extend along the display axis, and the imaging path. It has been found that optimum viewing by a user and imaging of the user, in particular in case of use with a laptop computer, may sharply peak about an angle between the mirror normal and the imaging axis of about 39-43 degrees and an angle between the display normal and the mirror normal of about 37-42 degrees, and in particular in combination. Values outside these ranges tend to result in one or more of spurious reflections, inclusion of parts of the display in the camera image, blocking visual access of the user to the display and/or laptop keyboard, poor imaging of the user in terms of positioning of the eyes of the user in the lower half of the camera images, and the appearance of user submissiveness and/or user dominance.

Preferably, one or more of the display, the camera panel and the blind are arranged perpendicular to the reflection plane.

The apparatus may be arranged to set the display and the camera panel at an enclosed angle in the reflection plane to each other of about 75-85 degrees, preferably about 80-85 degrees. Such angle supports functional access to all keys of a laptop keyboard during use of the apparatus, e.g. during a call, when the display is part of a laptop computer, and discourages slumping during such use (e.g. during the call), and may prevent the user from looking at the display from below and thus experiencing subservience towards the discussion partner.

The camera panel may define a camera panel plane, and the blind may define a blind plane. The camera panel plane and the blind plane may each or both be perpendicular to the reflection plane. The apparatus may then be arranged to set the camera panel plane and the blind plane at an enclosed angle in the reflection plane to each other of about 5-20 degrees, preferably about 7-18 degrees.

The enclosed angle between the camera panel and the display as well as the enclosed angle between the camera panel plane and the blind plane may serve as nudges for the user to position the assembly such that a proper viewing path and imaging path are provided supporting the delivery of eye contact and unimpaired camera images of the user, in particular when the angle between the mirror normal and the imaging axis is about 39-43 degrees.

In an aspect, possibly in combination with any other embodiment disclosed herein and sharing respective benefits, herewith is provided an assembly for videoconferencing comprising a display, a camera and an apparatus removably mounted to the display and in turn comprising a blind, a semi-transparent mirror, and a camera panel determining a camera position and an imaging axis of the camera, in particular comprising the camera and/or comprising a mount for mounting the camera to the camera position and determining the imaging axis.

In the apparatus the blind, the mirror, and the camera panel are arranged in a general Z-shape such that an imaging path is defined along the imaging axis and a reflection thereof by the mirror in a direction away from the display in a reflection plane, for, in use, simultaneous viewing the display along a viewing path through the mirror by a user and imaging the user by the camera along the imaging path. In use the assembly comprises the camera mounted to the camera position and imaging axis. The viewing path and imaging path may generally coincide on one side of the mirror.

The blind is configured for freely and removably operably supporting the apparatus on the display. In particular, the blind may be configured for gripping over a top of the display and supporting the apparatus on the display, for which the blind may comprise a gripping portion.

By freely supporting the apparatus on the display, the apparatus is positioned on the display and so retained by gravity and/or friction instead of mechanical and/or chemical fixation systems such as locks, hinges, glue, etc, and the apparatus may be readily supported on and removed from the display. This may obviate modifications on the display and/or any housing or frame thereof.

When supported by the blind, the apparatus may be supported on or against the display at or near an opposite vertex of the Z-shape e.g. formed by a joint between the mirror and the camera panel.

The blind, in particular a gripping portion thereof may comprise one or more of hooks, protrusions, recesses, increased roughness, increased compressibility, increased resiliency, and increased surface friction coefficient, compared to other portions of the blind, e.g. being provided with one or more of (natural or artificial) rubber portions, silicone friction portions, polymer foam sections, etc.

It has been found that such solution suffices for suitably attaching the apparatus to the display and exploit the assembly. In particular, provision of pins, hooks, and/or other generally permanent devices and/or structures to the display, and/or separate supports may be obviated so that the apparatus may be removed from the display substantially without affecting the display. Also or alternatively, present-day displays, in particular laptop computer displays, tend to have a thin housing around the display screen which may lead to reduction of contact surface area between the gripping portion and the display which leads to focus load forces onto the contact surface area, therewith improving hold of the gripping portion onto the display. The gripping portion gripping over the display assists reducing or preventing leaking of light between the blind and the display therewith improving contrast and/or visibility of an image displayed on the display and/or improving contrast in the image captured by the camera. The gripping portion may be arranged to a specific display shape or rather to fit different display shapes, e.g. differing in thickness, surface shape and/or texture.

A portion of the blind may provide a high static friction force µ for supporting the apparatus. In particular, such portion of the blind may have a contact surface for engaging the display and supporting the apparatus on the display, having specific static friction coefficient of 0,8 or more, preferably 1,0 or more. Herein the specific static friction coefficient µₛ is defined as the ratio of the tangential force F_{t_s} required to produce sliding of two substantially identical solid surfaces over each other divided by the normal force F_{N_s} between the two surfaces, µₛ = Ft / F_{N_s}. A higher specific static friction coefficient may improve gripping force onto the display and/or a display housing.

The blind may be provided with a foldable portion, e.g. a compliant and/or hinged portion, which may be arranged, e.g. in a substantially vertical position by folding and/or hanging down, behind the display to reduce the size of the assembly, and/or which may be weighted such as being provided with a high density material (e.g. a metal) for a counterweight to the camera panel and/or the mirror.

The blind may be provided with a rear stop and/or a front stop for defining a forward/backward position and/or orientation of the apparatus on the display. One or both stops may assist defining a predetermined, in particular: optimum, position and/or orientation of the apparatus with respect to the display, which position and/or orientation may be selected with respect to secure attachment of the apparatus and/or optical quality (viewing the display and/or imaging a user). The rear stop and the front stop, if provided both, may be arranged opposite each other.

In an aspect, possibly in combination with any other embodiment disclosed herein and sharing respective benefits, herewith is provided an assembly for videoconferencing comprising a display, a camera and an apparatus removably mounted to the display and in turn comprising a blind, a semi-transparent mirror, and a camera panel determining a camera position and an imaging axis of the camera, in particular comprising the camera and/or comprising a mount for mounting the camera to the camera position and determining the imaging axis.

The blind, the mirror, and the camera panel are arranged in a general Z-shape such that an imaging path is defined along the imaging axis and a reflection thereof by the mirror in a direction away from the display in a reflection plane, for, in use, simultaneous viewing the display along a viewing path through the mirror by a user and imaging the user by the camera along the imaging path. In use the assembly comprises the camera mounted to the camera position and imaging axis. The viewing path and imaging path may generally coincide on one side of the mirror.

The apparatus, at least when removed from the display, may be foldable, the blind, mirror, and camera panel being foldable with respect to each other, in particular being foldable about vertices of the Z-shape and/or being foldable flat onto each other.

Thus, the apparatus may be conveniently transported and/or stored when not in use. Folding along the vertices of the Z-shape facilitates construction of the apparatus. The foldability of the apparatus may be provided by hinges such that the blind, mirror and camera panel may be and remain attached to each other. One or more of the hinges may comprise a compliant hinge.

In a folded configuration, the blind and/or camera panel may protect the mirror. In particular, the blind and/or camera panel may be formed to cover substantially all of the mirror e.g. having the same (or larger) size and shape as the mirror when folded flat onto each other. The blind and/or camera panel may be at least partly rigid, and/or may comprise shock-absorbing material, possibly as a cover layer, either or both of which may further enhance protection of the mirror.

At least one of the blind and the camera panel may be provided with a foldable portion for covering the mirror in a folded configuration of the apparatus (the Z shape being folded for storage and/or transport), preferably for covering the mirror in full, together with the adjacent camera panel and/or blind, respectively. Thus, the blind and/or camera panel may be provided with a foldable portion to reduce the size of the camera panel in an unfolded configuration for operable use, and to cover, in the folded configuration, one side of the mirror, preferably substantially all of the mirror. Such reduction in size of the camera panel assists preventing imaging of the camera panel by the camera when using a field of view for the recording of the images that generates agreeable images of the user including the head and shoulders of the user. Such reduction in size of the blind assists reducing bulk of the assembly in use, And/or may assist maintaining position of the apparatus on the display.

The foldable portion may be folded away from the mirror in the unfolded configuration of the apparatus as a whole. The apparatus may comprise one or more closures, such as one or more of springs, hinge locks, straps (preferably elastic), buckles, buttons and/or magnets, for maintaining and/or securing the foldable portion in a folded-away configuration (e.g. being folded and held onto the blind and/or the camera panel, respectively), which may increase user comfort and/or protection of elements of the apparatus, in particular of the mirror.

The mirror may have an end configured to be, in use, closest to the display, e.g. at or near a vertex of the Z-shape. The apparatus may comprise a display mounting side for exposing the display to the mirror for a predetermined display height relative to the end of the mirror. The camera panel may then have a camera panel length relative to the end of the mirror, and the mirror may have a mirror height relative to the end of the mirror. Then, the camera position on the camera panel may be located along the reflection plane relative to the end of the mirror at a position in a range from 45 to 60% of the camera panel length, preferably in a range of 50 to 55% of the camera panel length. Also or alternatively, the imaging axis may then be arranged to be incident on the mirror at a reflection position along the reflection plane relative to the end of the mirror at a position in a range from 45 to 60% of the mirror height, preferably in a range of 50 to 55% of the mirror height.

The camera position may be based on the recognition that in videoconferences, the discussion partner is preferably displayed with the face and shoulders as substantially filling the display of the user with the eyes of the discussion partner usually positioned at about 45-60% from the bottom of the displayed image. Arranging the camera position as specified supports the appearance of eye contact by the user in the images recorded by the camera when the user looks at the eyes of the discussion partner on the display as the reflection of the line of sight off the mirror hits the (lens of the) camera or a point on the camera panel very close to it. This range for the camera position also facilitates agreeable imaging of the user by the camera to the discussion partner, with the images including the head and shoulders of the user, and the eyes of the user positioned in the preferred region, and without including components of the assembly in these images when using a field of view for the recording of the images that generates agreeable images.

The assembly may comprise a laptop computer providing the display. The laptop computer may comprise a body portion comprising a keyboard and the display hinged to each other by one or more hinges. The hinge(s) may allow arranging and maintaining the display supported by the hinge(s) on the body portion in a substantially upright orientation in a range from vertical to 40 degrees inclined to the vertical. The display is typically set by the user in a range of 10 to 30 degrees inclined to the vertical in a videoconferencing session for comfortably viewing the display. Note that in case the body portion is set inclined to the vertical, e.g. by supporting the laptop on a stand on a desk, the angle of the display to the vertical may differ from the angle between the display and the body portion.

To facilitate operably arranging the apparatus on the display of such a laptop computer, the apparatus may have a symmetric weight distribution about the reflection plane. The apparatus may include a centre of mass arranged offset away from the imaging path to position the centre of mass of the apparatus towards the display when the apparatus is operably supported on a display arranged vertically or inclined backwards, reducing torque on the hinges connecting the display and the keyboard.

The apparatus may comprise one or more side blinds between the blind and the mirror, the side blinds preferably defining a relative position and/or orientation of the mirror and the blind, e.g. defining an enclosed angle between the blind and the mirror or: an angle between a blind normal and a mirror normal in the reflection plane. Also or alternatively, the side blinds may define a relative position and/or orientation of the mirror and the display in the assembly, e.g. defining an enclosed angle between the mirror and the display, or: defining an angle between the mirror normal and the display normal in the reflection plane. The side blinds may be configured as a nudge for the user to place the apparatus on the display in a position that substantially blocks ambient light from the sides reaching the display, thereby fixating the angle between the mirror normal and the display normal in the reflection plane.

Like the blind, the one or more side blinds may be opaque to prevent (effects from) light incident on the camera and/or the display which may negatively affect visibility and/or reduce contrast in a user's view of the display and/or a camera image of the user. Any blind may preferably have a dark colour, e.g. dark blue, dark grey, black, at least on an interior side towards the display and/or user. Also, or alternatively, the one or more side blinds may assist determining relative positions of the blind and mirror, and possibly of the blind and the camera panel and/or of the mirror and the camera panel if the one or more side blinds also extend between the mirror and the camera panel. Thus construction and/or use of the apparatus may be facilitated. The side blind(s) may be foldable, in which case at least part of it/them may be made of foil or fabric, e.g. cloth (possibly coated), polymeric film, etc.

The apparatus and the display may be connected wireless, e.g. using connection systems and protocols like WiFi, Bluetooth, infrared, etc. However, it is preferred that the apparatus comprises a camera and a connector and/or cable for interconnecting the camera with the display and/or with a processor connected with the display.

The connector and/or cable may be configured according to any suitable standard and/or generation thereof, e.g. IEEE-standardized, HDMI, USB, Thunderbolt, Lightning, D-Sub, RS-232, Ethernet, etc. which may be of any suitable generation. Thus, the camera and the display, in particular a processor connected with the display may have a wired connection which may allow, compared to a wireless connection, one or more of accelerating data transfer, reducing signal noise, improving signal quality, increasing signal transfer bandwidth, increasing data transmission security and/or hacking prevention, obviating provision of a separate power supply for the camera (e.g. aboard the apparatus and/or as a separate device), facilitating updating apparatus software (e.g. camera drivers). The apparatus may comprise plural operably connected connectors so that the apparatus can maintain and/or increase a total number of available connectors when the apparatus is connected to the display or a device providing, and/or connected with, the display.

To provide any embodiment of the assembly, the apparatus may be supplied separately from the display.

Associated with the preceding, therefore, herewith further is provided an apparatus for any embodiment of such assembly. The apparatus then comprises the blind, the semi-transparent mirror and the camera panel, and it may comprise any or all of the features specified for (that portion of) the apparatus in the disclosure of the respective embodiment of the assembly, accordingly providing the respective benefits. E.g., herewith is provided an apparatus for videoconferencing, configured for removably attaching to a computer display and comprising a blind, a semi-transparent mirror defining a mirror normal, and a camera panel comprising a mount for mounting a camera to a camera position and imaging axis and/or comprising a camera mounted to the camera position and imaging axis. Then, the blind, mirror, and camera panel may be connected in a general Z-shape such that an imaging path is defined along the imaging axis and a reflection thereof by the mirror in a reflection plane, for, in use and comprising the camera mounted to the particular camera position and imaging axis, simultaneous viewing a display along a viewing path through the mirror by a user and imaging the user by the camera along the imaging path. The viewing path and imaging path may generally coincide on one side of the mirror. The mirror may then have a normal and the apparatus is arranged to set the mirror normal and the imaging axis at an angle (ϕ) to each other in the reflection plane in a range from 35 to 44 degrees, preferably in a range from 39 to 43 degrees.

The angle may be set by the angle between the imaging axis and the camera panel, and by a hinge between the camera panel and the mirror defining a particular relative orientation. The hinge between the camera panel and the mirror preferably determines a maximum enclosed angle between the mirror and camera panel, such as by providing one or more predefined stopping positions and preferably a hard stop at a particular rotary position which may correspond to the desired enclosed angle, wherein the hard stop may be determined by an end position of the rotary range. Also or alternatively, the apparatus may be provided with one or more drives and at least one associated controller, for adjusting one or more of the hinges to a predetermined angle. The controller may be programmable.

The camera panel may define a camera panel plane and the blind may define a blind plane. The camera panel plane and the blind plane may each or both be perpendicular to the reflection plane. The apparatus may then be arranged to set the camera panel plane and the blind plane at an angle in the reflection plane to each other of about 5-20 degrees, preferably about 7-18 degrees, supporting the delivery of eye contact and unimpaired camera images of the user, in particular when the angle between the mirror normal and the imaging axis is about 39-43 degrees.

The imaging axis may be normal to the camera panel, but preferably extends at an enclosed angle to the camera panel normal in the reflection plane in a range of 1-5 degrees towards an end of the camera panel configured to be, in use, closest to the display. This may support delivery of eye contact and is may assist providing a desired image composition of the user and/or unimpaired camera images of the user, in particular when the angle between the mirror normal and the imaging axis is about 39-43 degrees.

The apparatus may preferably be configured for being freely and removably operably supported by the blind on the computer display, e.g. having a gripping portion.

Also or alternatively, associated with the above, herewith is provided an apparatus for videoconferencing, wherein the apparatus is configured for removably attaching the apparatus to a computer display and comprises a blind, a semi-transparent mirror defining a mirror normal, and a camera panel for mounting a camera to a camera position and imaging axis and/or comprising a camera mounted to the camera position and imaging axis. The blind, mirror, and camera panel may be connected in a general Z-shape such that an imaging path is defined along the imaging axis and a reflection thereof by the mirror in a reflection plane, for, in use and comprising the camera mounted to the particular camera position and imaging axis, simultaneous viewing a display along a viewing path through the mirror by a user and imaging the user by the camera along the imaging path. The viewing path and imaging path may generally coincide on one side of the mirror.

The apparatus may preferably be configured for being freely and removably operably supported by the blind on the computer display, e.g. having a gripping portion. E.g., the blind may be provided by a gripping portion having a high friction coefficient, and/or the apparatus may have a center of mass arranged close to a vertex of the Z-shape of the mirror and the camera panel, and/or the mirror, the blind and the camera panel may be constructed of light-weight materials such as thin transparent material for the mirror, (carbon) fiber and/or of foam and/or of grid and/or of mesh or other rigid and light-weight material for the blind and camera panel. Any or all of these may assist the operable supporting as provided herein.

The blind, mirror, and camera panel may be foldable with respect to each other, in particular being foldable about vertices of the Z-shape and/or being foldable flat onto each other.

The apparatus may comprise one or more closures for maintaining and/or securing the folded configuration.

The blind and/or the camera panel may be provided with a foldable portion for covering the mirror, preferably fully, in a folded state of the apparatus. The foldable portion(s) may be formed as an extension of the blind and/or camera panel. Thus, the blind and/or camera panel may be provided with a foldable extension to reduce the size of the camera panel in use, and to cover in a folded configuration of the apparatus for storage and/or transport, the mirror, preferably substantially all of the mirror. Such reduction in size of the camera panel, in use, may assist preventing imaging of the camera panel by the camera when using a field of view for the recording of the images that generates agreeable images of the user including the head and shoulders of the user. Such reduction in size of the blind, in use, may assist reducing bulk of the assembly. The apparatus may be provided with one or more closures for locking for maintaining and/or securing the foldable portion in a folded-away configuration in use.

The mirror may have an end configured to be, in use, closest to the display, e.g. at or near a vertex of the Z-shape. The camera panel may have a camera panel length relative to the end of the mirror, and the mirror may have a mirror length relative to the end of the mirror. Then, the camera position on the camera panel may be located along the reflection plane relative to the end of the mirror at a position in a range from 45 to 60% of the camera panel length, preferably in a range of 50 to 55% of the camera panel length. This range for the camera position on the camera panel also supports a reflection position on the mirror that facilitates the appearance of eye contact in the images recorded by the camera when the user looks at the eyes of the remote discussion partner on the display, including the head and shoulders in the recorded images. Also or alternatively, the imaging axis is arranged to be incident on the mirror at a reflection position along the reflection plane relative to the end of the mirror at a position in a range from 45 to 60% of the mirror length, preferably in a range of 50 to 55% of the mirror length. Thus, the apparatus facilitates providing an agreeable image composition of the user for the user's discussion partner.

The apparatus may comprise one or more side blinds between the blind and the mirror, the side blinds preferably defining a relative position and/or orientation of the mirror and the blind, e.g. defining an enclosed angle in the reflection plane between the blind and the mirror. The one or more side blinds may be arranged parallel to the reflection plane.

The apparatus may comprise a camera and preferably one or more connectors and/or cables for interconnecting the camera with the display and/or with a processor connected with the display. The one or more connectors may comprise a cable connector.

The camera may be provided with one or more lenses, each lens may be a compound lens comprising plural optical elements that may be one or more of refractive, diffractive, reflective, and polarization and/or wavelength specific. The camera may be a compound camera, e.g. formed of a combination of plural camera modules (which may each comprise an image sensor and a lens), e.g. two, three or four camera modules, co-operating together to provide one image of an object along an effective imaging axis and imaging path; the co-operation may be physical and/or by means of one or more image processing techniques.

The camera lens may be arranged in or below a top surface of the camera panel. Thus, the lens does not interfere with the user's view of the display and/or the lens does not interfere with the image of the user for the user's discussion partner.

In use the camera may have a field of view about the imaging axis at most spanned by the blind. Thus, the camera does not capture spurious light which may negatively affect the image.

The camera may have a field of view of a generally rectangular cross section about the image axis, preferably having an aspect ratio (width:height) in a range of 4:3 to 16:9. This may correspond with a display format of the display of the user and/or of the discussion partner, reducing or preventing deformation due to scaling. The vertical field of view may be in a range of 31 to 50 degrees. With a smaller field of view the camera may be unable to capture the face and shoulders of the user when the user is seated close to the display. With a larger field of view camera images may include parts of the assembly and be polluted by ambient light.

The apparatus may comprise a visual camera position (camera lens position) indicator and/or image path indicator. Such indicator may be located on or near the camera position and/or on the mirror at an (intended) intersection of the image axis and the mirror. This may assist the user in establishing an optimum position and/or orientation and/or posture of the apparatus and/or the user itself for imaging and establishing (virtual) eye contact with the discussion partner. The indicator may emit light and/or comprise (differently) colour marking and/or a surface structure marking.

As indicated before, the camera mount may be integrated in the camera panel, e.g. comprising a mobile telephone mount and/or webcam mount and/or other device with a camera, directing the imaging axis of the device upwards towards the mirror.

The camera and/or camera mount may be position-adjustable relative to the camera panel, in particular along the panel, e.g. being movable in front-back and/or in left-right directions, possibly associated with mounting different cameras.

The apparatus may comprise one or more microphones and/or speakers. The one or more microphones and/or speakers may be operably directed toward a user for receiving sound from the user and/or directing sound to a user. The one or more microphones and/or speakers may be positioned on a top surface of the blind and/or positioned on a top surface of the camera panel, possibly being arranged to be spaced from the display as far as, or further than, the camera position, e.g. being positioned a distance from the end of the camera panel close to the display that is at least as much as the distance from the end of the camera panel to the camera position. This may reduce or prevent sound distortions generated by sound wave reflections off the mirror and/or other parts of the assembly. This may in particular improve sound quality when using the apparatus with a laptop computer compared to using the microphone(s) and speaker(s) included in the laptop, as parts of the apparatus may be placed between the laptop microphone(s) and/or speaker(s) and the user, hindering sound detection (in particular speech detection). One or more microphones and/or speakers of the apparatus may be arranged unobscured.

The apparatus may comprise one or more light sources, e.g. generally directed toward a user. This may improve image quality; in particular in cases of poor external illumination conditions (e.g. low light level, high relative background brightness, uneven and/or asymmetric illumination, etc.). Also or alternatively, one or more light sources may be directed downwards towards the keyboard to enhance readability of the key signs.

Any such microphones and/or speakers and/or light sources may be integrated into the apparatus and/or be suitably mounted to the apparatus, for which at least part of the closure may be used, if provided; e.g. one or more magnets.

The apparatus may comprise plural connectors interconnected to each other and be formed as a hub between the connectors. Thus, the apparatus may maintain or increase the number of connectors of an assembly in which the apparatus is used, also in case the apparatus is cable-connected with the display and/or a processor connected with the display. Any connectors discussed herein may be of the same or of different types (e.g. connectors according to different standards such as any type of USB, HDMI, Thunderbolt, Ethernet, 3,5 mm audio jack, etc.) extending possibilities of use and flexibility.

A cable for connecting the camera to the display and/or a processor connected to the display may be retractable into or onto the apparatus and may be included as an inseparable component of the apparatus to prevent misplacement of the cable when the apparatus is removed from the display.

### BRIEF DESCRIPTION OF THE DRAWINGS

The above-described aspects are next explained and elaborated with further details and benefits with reference to the drawings showing a number of embodiments by way of example.
Figs. 1-4 show an assembly comprising a laptop-form factor computer provided with an apparatus for videoconferencing, according to the present concepts, with Fig. 3 including a schematic view of an operably configuration in use and some relevant parameters of the assembly;
Figs. 5-8 show the apparatus for videoconferencing, according to Figs. 1-4, in an unfolded configuration for use and, respectively, in a folded configuration for transport and/or storage;
Fig. 9 shows another assembly comprising an apparatus according to Figs. 1-8;
Fig. 10 shows an assembly with the camera provided by a mobile telephone;
Figs. 11-12 show, schematically, a comparative example.

### DETAILED DESCRIPTION OF EMBODIMENTS

It is noted that the drawings are schematic, not necessarily to scale and that details that are not required for understanding the present invention may have been omitted.

Further, unless otherwise specified, terms like "detachable" and "removably connected" are intended to mean that respective parts may be disconnected essentially without damage or destruction of either part, e.g. excluding structures in which the parts are integral (e.g. welded or moulded as one piece), but including structures in which parts are attached by or as mated connectors, fasteners, releasable self-fastening features, etc. The verb "to facilitate" is intended to mean "to make easier and/or less complicated", rather than "to enable".

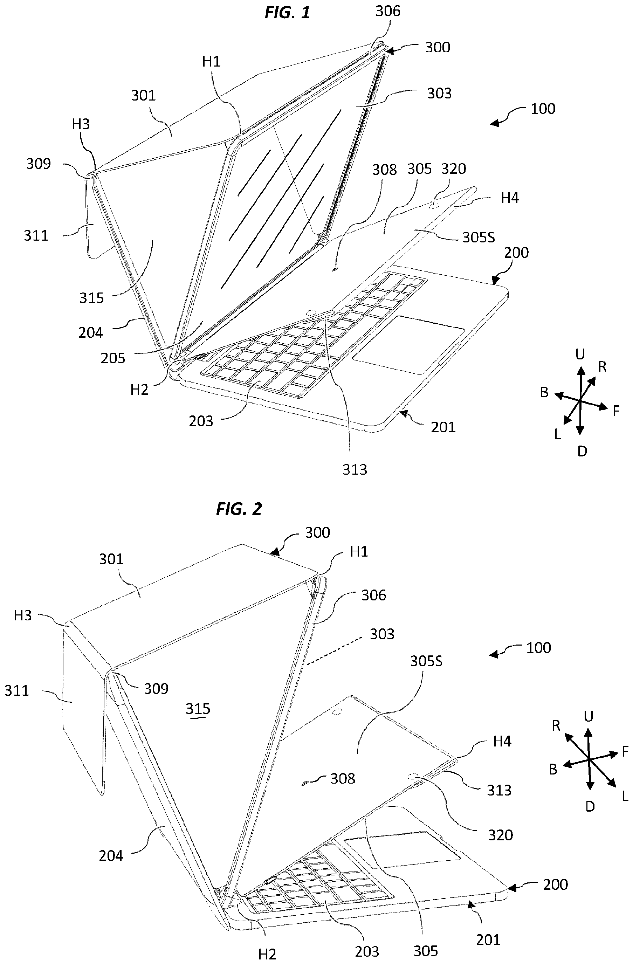

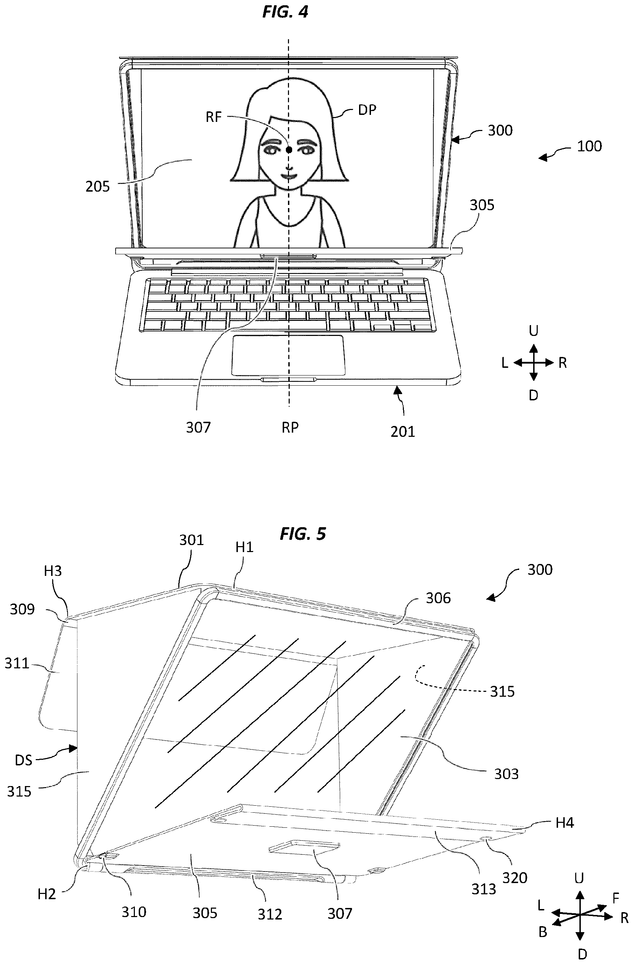

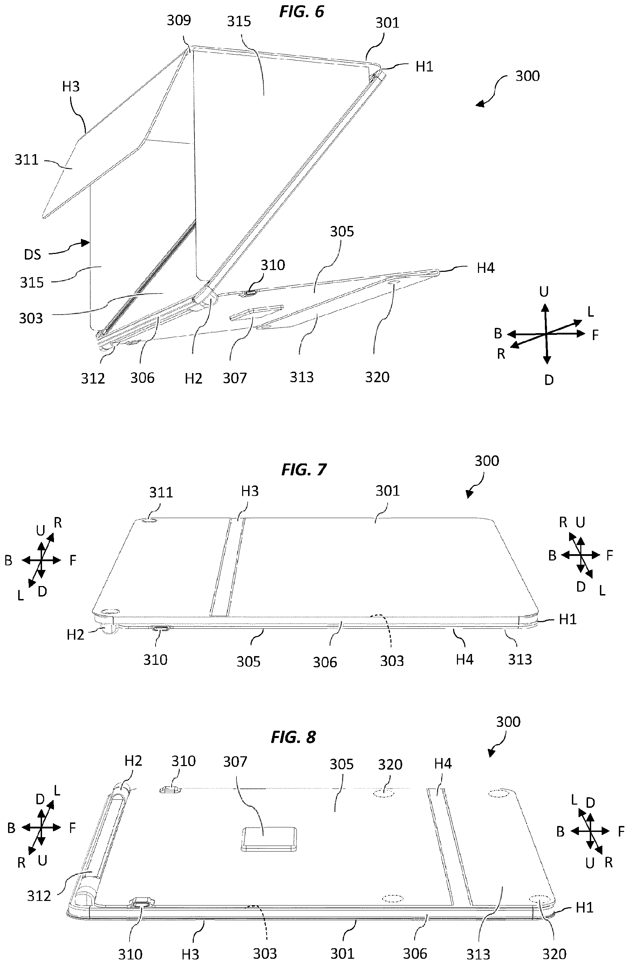

Figs. 1-4 show an assembly 100 for videoconferencing comprising a computer 200 provided with an apparatus 300 as detailed below and shown itself in Figs. 5-6 in an unfolded configuration for use and, respectively, in Figs. 7-8 in a folded configuration for transport and/or storage.

The shown exemplary computer 200 has a standard laptop form factor, comprising a base portion 201 with a keyboard 203 and display portion (here: lid) 204 providing a (flat panel) display 205 movably attached to the base portion 201 via one or more hinges (not shown). In some cases the base portion 201 and the display portion 204 may be detachable. The display 205 may be arranged generally upright or at least partly inclined relative to a supporting surface and/or a vertical direction, typically inclined backwards. Directions up U, down D, front F, back B, left L, and right R (up/down vertical; front/back and left/right horizontal) are indicated for a normal use configuration (laptop base portion 201 on a desk, not shown) in normal use in the Figs.

In an average use configuration the opening angle θ of the laptop between the keyboard 203 and the display 205 (in a normal plane to both) is set by the user and may be about 90-130 degrees generally or about 110-130 degrees such as about 120 degrees. When the computer 200 is placed on a horizontal support surface such as a desk (not shown), an opening angle θ of about 120 degrees results in a backwards inclination of the display 205 of about 30 degrees relative to the vertical. The (flat panel) display 205 has a display normal 205N.

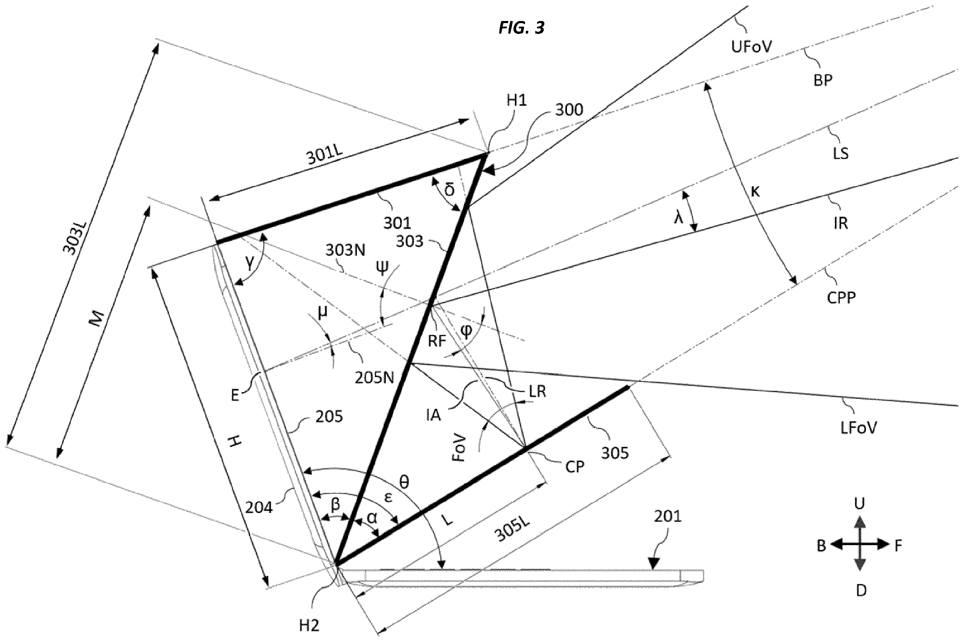

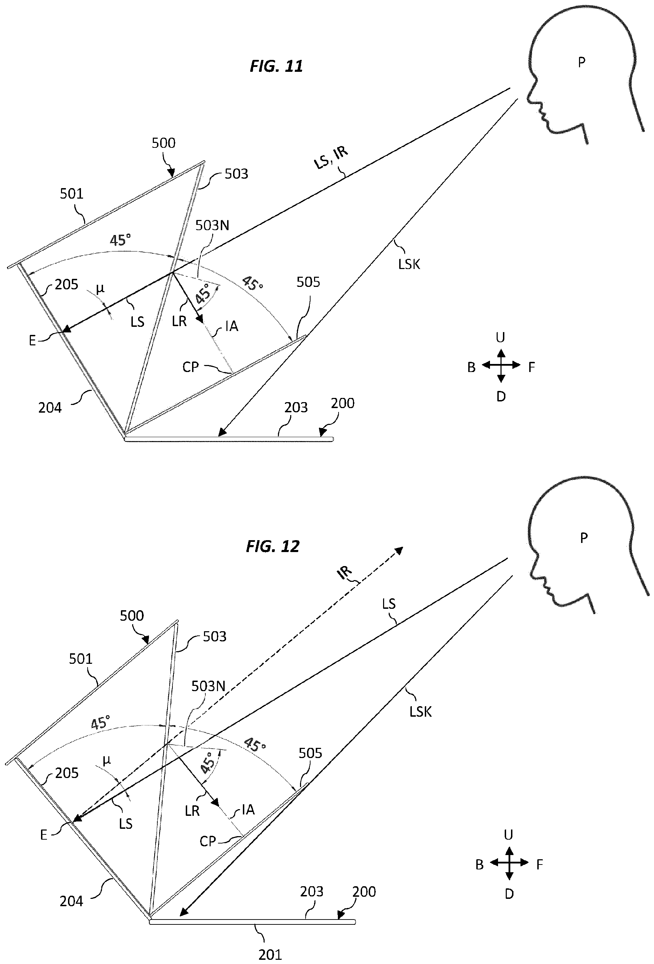

In use, a user P (only shown in Figs. 11-12) will look at the display 205 along a line of sight LS. The line of sight LS may be along the display normal 205N or, more common as indicated, at a slight downward angle (see below), i.e. at an angle µ in the vertical plane between the line of sight LS and the display normal 205N. The line of sight LS is typically directed at the eyes of the discussion partner DP (position of the eyes being indicated with E in Fig. 3) whenever the user P requires access to visual cues from the discussion partner DP during the videoconferencing session. When this occurs, it is desirable that the discussion partner DP can see this in the video images recorded by the assembly 100 in order to see the facial response of the user P to the visual cues sent by the discussion partner DP, so the discussion partner DP can read the face of the user P and eye contact appears to take place. It is preferred by a user P to tilt the display 205 at an opening angle θ so that the angle µ between the line of sight LS and the display normal 205N when gazing at the eyes E of the discussion partner DP and the facial region directly below is in a range of µ being about 0 degrees to µ being about 10 degrees in order for the user P not to experience subservience towards the discussion partner DP, but neutrality or slight dominance.

The apparatus 300 comprises a blind 301, a semi-transparent mirror 303, and a camera panel 305 arranged in a general Z-shape. Respective normal planes to the blind 301, mirror 303 and camera panel 305, (not shown) may preferably all be parallel to each other. In the Z shape, the mirror 303 is arranged as a main diagonal between the blind 301 and the camera panel 305, respectively, so that in use, the mirror 303 is arranged between the display 205 and the camera panel 305. In the Figs., the mirror 303 is enclosed by an optional mirror frame 306. The apparatus 300 is supported by the blind 301 on the laptop lid 204 and rests at or near a lower vertex of the Z-shape (joint between the mirror and the camera panel 305) on the display 205 and/or a housing of the display 205 proper. The camera panel 305 is arranged such that the imaging axis IA points upward from the camera panel 305.

At the vertices of the Z-shape, here provided by joints of the blind 301 and the mirror 303 and, respectively, the mirror 303 and the camera panel 305, the apparatus 300 is foldable. Here, the apparatus is provided with one or more hinges H1 and one or more hinges H2 such that angles between the blind 301 and the mirror 303 and between the mirror 303 and the camera panel 305 are adjustable and the blind 301, mirror 303 and camera panel 305 are foldable onto each other (see Figs. 7-8 and below). One or each of the hinges H1, H2 may be formed to provide one or more predetermined angles, e.g. having a hard stop limiting a rotation angle and/or having latching members to reversibly fix hinged members in one or more particular relative positions.

The camera panel 305 is provided with a camera 307 with a camera position CP and imaging axis IA. The imaging axis IA may be normal to the camera panel 305 or at an angle to that such as e.g. in a range of 1-5 degrees towards the display, such as shown in Fig 3. The camera panel 305 provides that the camera 307 is configured to capture images along the imaging axis IA. The imaging axis IA generally is along an axis of a lens (not shown) of the camera, which may be a compound lens, and/or is perpendicular to a sensor surface (not shown). The camera position CP may be defined by a position of at least part of the lens and/or at least part of a sensor portion of the camera. The camera 307 is optionally arranged fully in or below a hole 308 in a surface 305S of the camera panel 305 facing the mirror 303 such that no camera portion protrudes from the camera panel 305 towards the mirror 303. The camera position CP in directions along the camera panel 305 may be selected to provide a desired image composition and/or in view of capturing or not (e.g. excluding) portions of the apparatus 300 into a field of view of the camera 307.

The mirror 303 has a normal 303N. From the camera position CP, an imaging path IP is defined along the imaging axis IA and a reflection IR thereof by the mirror 303 in a direction away from the display 205, wherein the imaging axis IA and the reflection IR span a reflection plane RP, which preferably is oriented in the up/down/front/back plane and/or forms a left-right midplane or -symmetry plane of the apparatus. The reflection plane RP preferably is generally perpendicular to the camera panel 305 and/or the blind 301 and/or the display 205. The reflection plane RP also contains a mirror normal 303N and preferably also contains the line of sight LS when the user P looks at the eyes E of the discussion partner DP on the display 205.

The camera 307 may have a field of view FoV defined by the lens of the camera 307 and/or a processor processing and possibly cropping images recorded by the lens. The field of view FoV is provided from a solid angle about the imaging axis IA, which may be cone-shaped or pyramid shaped or have another suitable shape. The field of view FoV in vertical direction extends, via reflection by the mirror 303, between a lower boundary LFoV and an upper boundary UFoV. The field of view FoV may be wider in one direction than in a second direction, perpendicular to the first direction. is preferably set in a range of about 31 to 50 degrees to support agreeable images. Larger values may result in image pollution by including parts of the assembly (e.g. camera panel 305 and/or display 205) and/or non-reflected images of objects in the space above the assembly. The lower boundary of the reflection of the vertical field of view LFoV is thus not blocked by the camera panel 305. Lower values of the vertical field of view FoV may exclude a substantial portion of the upper body (not shown) of the user P and/or a portion of the head of the user P in the images recorded by the camera 307 in normal use of the assembly with the user P sitting between around 50 and 100 centimetres from the display 205.

The camera panel 305 is provided with optional connectors 310 for interconnecting the camera 307 with the laptop 200 and for providing a further connection, as a hub. A connector mounting portion 312 may be weighted (e.g. formed or provided with a high-density material, such as a metal, compared to a lower density material of one or more other portions of the camera panel 305) for shifting the center of mass of the apparatus 300 towards the display 205. The camera panel 305 may be made largely of a stiff, light-weight material such as one or more of (carbon) fiber, foam, grid, and mesh.

Best seen in Figs. 3 and 4, a user P viewing the eyes of the remote discussion partner DP on the display 205 along the line of sight LS may be imaged by the camera 307 arranged at the camera position CP along an imaging path IP formed by the imaging axis IA and a reflection IR thereof in the reflection plane RP. The reflection IR is preferably directed at the face of user P below the eyes of user P so that the face and possibly an upper fraction of the user's body are imaged and the eyes of the user P are not located in the bottom half of the recorded images. Moreover, an enclosed angle λ between the line of sight LS and the reflected part IR of the imaging path IP in the reflection plane RP preferably is in a range of λ being about 0 degrees to λ being about 10 degrees when the user P seeks eye contact with the remote discussion partner DP by looking at (the position E of) the eyes of the discussion partner DP on the display 205 as shown in FIG 3, to prevent the user P from appearing to "be looking up" to the remote discussion partner DP in the images recorded by the camera 307 and thereby suggesting subservience or to "be strongly looking down" at the remote discussion partner DP.

The apparatus 300 is arranged to set the mirror normal 303N and the imaging axis IA to each other in the reflection plane RP at an angle (ϕ) in a range from 35 to 44 degrees, preferably in a range from 39 to 43 degrees. This supports agreeable imaging of the user P by the camera 307 and delivery of eye contact when the user P looks at the eyes E of the discussion partner DP. The display normal 205N and the mirror normal 303N are set at an angle ψ to each other in the reflection plane RP in a range from 30 to 45 degrees, preferably in a range from 37 to 42 degrees.

The camera panel 305 is arranged inclined to the mirror 303 at an enclosed angle α in the reflection plane, which may be, as here, limited and/or fixed by the hinge H2, e.g. by a stop in the apparatus, in particular a stop in the hinge H2. The mirror 303 is arranged inclined to the display 205 at an enclosed angle β in the reflection plane. The angles α and β may be about equal in which case the mirror 303 is arranged along, or parallel to, a plane substantially bisecting the total enclosed angle ε = α + β between the display 205 and the camera panel 305. The enclosed angle ε between the display 205 and the camera panel 305 in the reflection plane RP ranges from about 75 to 85 degrees, preferably in a range of about 80 to 85 degrees. This encourages the user P to position the display 205 at an opening angle θ such that the user P has visual access to the keyboard 203 and the display 205, and such that eye contact is facilitated and the user P is agreeably imaged by the camera when the user P directs the line of sight LS towards an image of the eyes of the discussion partner DP on the display 205.

The camera panel 305 is a substantially 2-dimensional object having significanly larger depth (viewing direction, generally along B-F in the Figures) and width (L-R direction in the Figures) than thickness (U-D direction in the Figures) and defines a camera panel plane CPP (depth, width); likewise the blind 301 is a substantially 2-dimensional object having significanly larger depth (viewing direction, generally along B-F in the Figures) and width (L-R direction in the Figures) than thickness (U-D direction in the Figures) and defines a blind plane BP (depth, width); see Fig. 3. The apparatus 300 may be configured to point these planes CPP, BP, in use, towards each other in a direction away from the display 205, a distance between the planes decreasing in a direction away from the display 205; therewith the relative orientation can conform to a field of view of the user P at rest (non-moving) and may assist directing the user's gaze. The opening angle κ between the camera panel plane CPP and the blind plane BP in the reflection plane RP may preferably be in a range of about 5-20 degrees, preferably in a range of about 7 to 18 degrees. Such arrangement encourages the user P to set the opening angle θ of the laptop between the display 205 and the keyboard 201 in a position that supports agreeable imaging of the user P by the camera 307 and delivery of eye contact to the remote discussion partner DP. Also or alternatively, the optimum line of sight LS and viewing path for establishing and maintaining eye contact are defined and directed by the apparatus in use.

The blind and/or camera panel may be sized in accordance with the field of view of the camera so as not to be visible in an image recorded by the camera. E.g., the blind 301 may have a size, in particular a length 301L associated with a vertical field of view FoV of the camera 307 for blocking ambient light from above so the camera 307 does not collect light rays passing along the blind 301. Also or alternatively, the camera panel 305 may have a size, in particular length 305L associated with a vertical field of view FoV of the camera 307, that prevents the lower boundary of the reflection of the vertical field of view LFoV from being blocked by the camera panel 305. Thus, the camera 307 does not see any portion of the camera panel 305 via a reflection in the mirror 303. The length 305L is also sufficient to prevent the user P from seeing reflections in the mirror 303 of objects in the space below the camera panel plane CPP in normal use of the assembly 100.

The apparatus 300 may be supported on the laptop lid 204 by gravity and friction alone, without further fixation measures in normal operative configuration and position with the lid 204 arranged in a range from about vertical to an inclination backward (towards the back B) of about 30 degrees with respect to the vertical, and generally level in left-right (L-R) direction.

Best seen in Figs. 1-2, 5-6, the blind 301 is formed for gripping over and onto a top of the lid 204 and supporting the apparatus 300 on the lid 204 and thus on the display 205. Here, the blind 301 comprises a gripping portion 309 having an optionally profiled portion, in particular forward-backward curved, for better grip onto the lid 204.

The blind 301 is optionally provided with a foldable portion; here an extension 311, in use arranged on (not shown) or behind (shown) the lid 204. The extension 311 may be foldably mounted to the blind 301 with a hinge H3 as shown here and/or may grip around the display and/or engaging a back side of (a housing of) the display 205 (not shown). As shown, the hinge H3 may preferably be a multiple hinge and/or living hinge which may allow adjusting a position and/or radius of curvature of the fold and/or conforming to a curvature and/or thickness of the lid 204. The blind 301 and extension 311 may be dimensioned so that together they fully cover (one side of) the mirror 303 when the apparatus 300 is in the folded position. The extension 311 may form a counterweight to the blind 301, mirror 303 and camera panel 305. The extension 311 may be weighted (e.g. provided with a high-density material such as a metal). This, and/or a weighted connector mounting portion 312 and/or a relatively heavy hinge H2 and/or H3 may assist arranging, in use, a centre of mass CM of the apparatus 300 towards the display 205, facilitating torque reduction on the hinges of the laptop 200 and/or balancing the assembly 100 with the display 205 operably upright or inclined backwards, as indicated in Figs. 1-2.

The camera panel 305 is optionally provided with a foldable portion; here an extension 313. This front extension 313 is foldable back below the camera panel 305 and/or onto the camera panel 305 (not shown), possibly held in place by closures such as magnets 320 and/or by a hinge H4 connecting the extension 313 to the camera panel 305. The camera panel 305 and extension 313 may be dimensioned so that together they fully cover the mirror 303 when the apparatus 300 is in the folded position. The backward foldability of extension 313 reduces the forward protrusion of the apparatus 300, and/or prevents that a part of the camera panel is located within the vertical field of view of the camera 307, and/or arranges the centre of mass of the apparatus 300 towards the display 205 compared to protruding forward. Also or alternatively, the blind 301 may be provided with a foldable portion (not shown) on its front side (adjacent hinge H1), like the extension 313 of the camera panel (and/or like the foldable portion 311 of the blind 301 on an opposite side of the blind 301), which extension then may fold backwards onto the blind 301, preventing obscuring the mirror and moving the centre of mass of the apparatus 300 towards the display 205.

The apparatus 300 further comprises side blinds 315, between the blind 301 and the mirror 303, the side blinds 315 extend generally parallel to the reflection plane RP. The side blinds 315 are optionally of fabric or other foldable construction. The enclosed angle β between the display 205 and the mirror 303, and/or the enclosed angle γ between the display 205 and the blind 301, and/or the enclosed angle δ between the blind 301 and the mirror 303 may be limited or even fixed by the side blinds 315 and/or the hinge H1 and/or the gripping portion 309. The hinge H1 may comprise, like the hinge H2, a stop to define at least the angle δ.

Best seen in Figs. 5-6, a rear portion of the apparatus 300 is open providing a display mounting side DS for exposing the display 205 to the mirror 303 for a predetermined display height H relative to an end of the mirror 303 closest to the display, shown in Fig. 3.
The camera position CP is preferably located along the reflection plane RP at a distance L relative to the display 205, and/or an intersection of (a mirror plane defined by) the mirror 303 and (a camera panel plane defined by) the camera panel 305, which is about 45 to 60%, preferably 50 to 55%, of the camera panel length 305L measured from that end the display. The intersection may be defined by, or at least suitably approximated by, the end of the mirror 303 closest to the connection between the mirror 303 and the camera panel 305 (here provided by hinge H2), or in other words, the end of the mirror 303 closest to the display 205. Also or alternatively, noting that the mirror 303 has a mirror length 303L measured from the end of the mirror 303 closest to the display 205, the imaging axis IA may be arranged to be incident on the mirror 303 at a reflection position RF in the reflection plane RP at a distance M relative to the end of the mirror 303 closest to the display 205 which may equal 45 to 60%, preferably 50 to 55%, of the mirror length 303L.

As illustrated in Figs. 7-8, the apparatus, at least when removed from the display, is foldable. The blind 301, mirror 303, and camera panel 305 are connected with hinges at the vertices of the Z-shape. The blind 301, mirror 303, and camera panel 305 are thus foldable with respect to each other, about the vertices of the Z-shape, flat onto each other. The blind 301 with the extension 311 and the camera panel 305 with the extension 313 are dimensioned such that the mirror 303 is fully covered on both sides in the folded configuration.

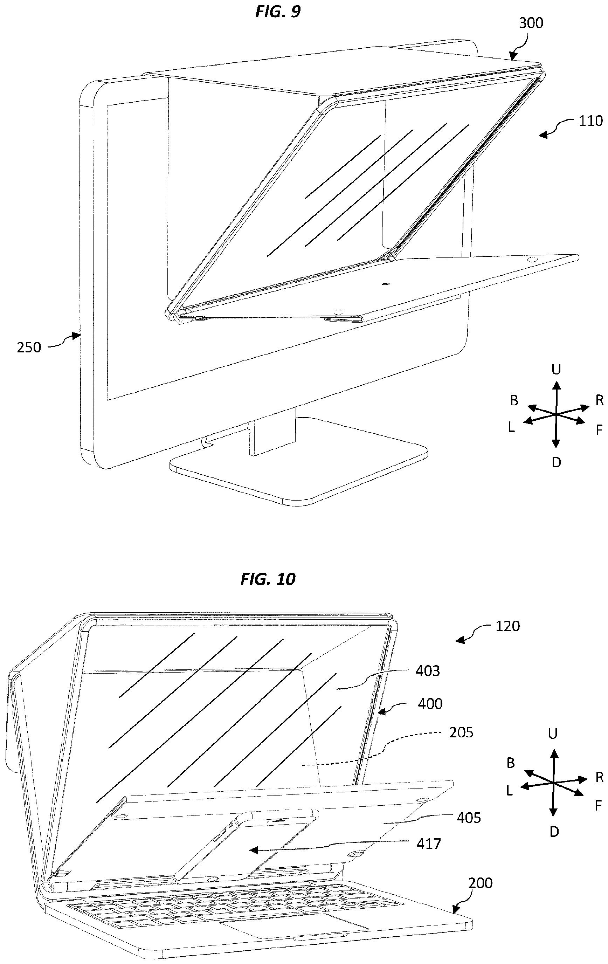

Fig. 9 shows as an embodiment another assembly 110 comprising the apparatus 300 of Fig. 1 mounted on a display 250 of a computer with a monitor form factor, provided with the apparatus 300 as detailed below. The monitor may serve as a monitor of a CPU-device located elsewhere (not shown) and/or serve itself as a fully operational computer. Such assembly provides the same benefits discussed above, albeit that an image of the remote discussion partner may have to be adjusted to operably fit the open area of the open rear portion of the apparatus 300 (cf. Figs. 4-6). When placing the apparatus 300 substantially off-center on the display 250, the user P (not shown) can use the assembly 110 for projecting eye contact when looking at the image of the discussion partner DP (not shown) on the display 250, and for quickly accessing other information projected on the display to the left or right of the apparatus on the same display 250, obviating the need for a second display. Alternatively, an embodiment of the apparatus 300 may be sized to conform to the size of the display 250 of the monitor.

Fig. 10 shows as an embodiment an assembly 120 comprising a laptop 200 and an embodiment 400 of the apparatus wherein the camera panel 405 is provided with a camera mount (not shown) for holding a removable device with one or more cameras; here, the camera is provided by a mobile phone 417, with the imaging axis of the camera or an assembly of plural cameras of the device 417, as the case may be, directed towards the mirror 403 through a hole in the camera panel 405. The device 417 may be operably connected to the laptop 200 for supporting videoconferencing with the laptop 200 configured to acknowledge a camera of the device 417 as an external camera. Also or alternatively, the device 417 may be operably coupled with the display 405 for displaying images from the device on the display and/or communicating along a same channel. Also or alternatively, (the camera of) the device 417 and the display 405 may use different communication channels and/or the device may be configured to image (and possibly record) a user viewing one or more other images on the display than a discussion partner, e.g. for commenting such images.

### COMPARATIVE EXAMPLE

Figs. 11-12 schematically show an assembly of a laptop computer 200 provided with an apparatus 500 of similar construction to the apparatus discussed above but having, in contrast to an apparatus shown in and discussed with respect to Figs. 1-10, an angle of 45 degrees between the mirror normal 503N and the imaging axis IA and an angle of 90 degrees between the display 205 and the camera panel 505 bisected by the mirror 503.

In such case the imaging axis IA and the reflection IR thereof extend at an angle of 90 degrees to each other in the reflection plane. The imaging axis IA is now parallel to the display 205, and its reflection IR normal to the display 205. The user P may look at the display 205 along a line of sight LS coinciding with the reflected imaging axis IR when looking at the eyes of the discussion partner E on the display 205, and the line of sight LS also coinciding with the display normal 205N so the enclosed angle µ between the line of sight LS and the display normal 205 equals zero, shown in Fig 11. Eye contact is established and the eyes of the user P are positioned in the recorded images along the line horizontally bisecting these images. The user P can view all of the display 205, but visual access to the keyboard 203 is impaired by the camera panel 505 as the line of sight LS directed towards the keyboard LSK is unable to reach the keys close to the display 205.

In order to obtain visual access to the keyboard 203 while maintaining visual access to the display 205, the user P may tilt the display 205 further backwards allowing a line of sight directed towards the keyboard LSK to reach the keys close to the display 205. The user P may now look at the eyes E on the display 205 along the line of sight LS, as seen in Fig. 12. The reflection of the line of sight LR is now directed at a point on the camera panel 505 much closer to the display 205 than the camera position CP so there is no eye contact. Moreover, the eyes of the user P are positioned in the lower half of the recorded image and the shoulders of the user P may not be included in at all. The user P also appears to be submissive towards the remote discussion partner in the recorded images. The enclosed angle µ between the line of sight LS and the display normal 205N is now negative, as the user P looks from below at the eyes E on the display 205 suggesting subservience towards the discussion partner.

Also, the blind 501, the mirror 503 and camera panel 505 must be significantly larger to conform to a vertical field of view of the camera 507 (not shown) of same opening angle as the camera 307 discussed above. As a result the apparatus 500 becomes large and heavy compared to the apparatus 300 discussed above and it obtains a centre of mass relatively far from the display 205. This hurts the stability of the assembly as gravity pulls the display 204 and the attached apparatus 500 forward, and the apparatus 500 may collapse onto the base 201 of the laptop.

The disclosure is not restricted to the above-described embodiments which can be varied in a number of ways within the scope of the claims.

For instance, the display may be provided by a tablet form computer. The apparatus would be placed on the tablet, with the tablet resting on a tablet stand for holding the tablet in a substantially upright position for comfortably viewing the display of the tablet. The tablet stand may be foldably connected to a keyboard. The keyboard is used for sending commands to the tablet. With the apparatus electronically connected to the tablet and the tablet configured to use the camera of the apparatus as an external camera, the tablet may be used for videoconferencing with eye contact.

Another embodiment may include a mount for a webcam.

An alternative embodiment for an apparatus with a mount for mounting a mobile phone with camera may include a mount for placing the mobile phone on top of the camera panel.

Elements and aspects discussed for or in relation with a particular embodiment may be suitably combined with elements and aspects of other embodiments, unless explicitly stated otherwise.

## Claims

1. An assembly (100) for videoconferencing comprising a display (205), a camera (307) and an apparatus (300) removably mounted to the display (205) and in turn comprising:
a blind (301),
a semi-transparent mirror (303), and
a camera panel (305) determining a camera position (CP) and an imaging axis (IA) of the camera (307), in particular comprising the camera (307) and/or comprising a mount for mounting the camera (307) to the camera position (CP) and determining the imaging axis (IA);
wherein in the apparatus (300) the blind (301), the mirror (303), and the camera panel (305) are arranged in a general Z-shape such that an imaging path (IP) is defined along the imaging axis (IA) and a reflection thereof by the mirror (303) in a Direction away from the display (205) in a reflection plane (RP), for, in use, simultaneous viewing the display (205) through the mirror (303) by a user (P) and imaging the user (P) by the camera (307) along the imaging path (IP),
wherein the mirror (303) has a normal (303N) and the apparatus (300) is arranged to set the mirror normal (303N) and the imaging axis (IA) to each other at an angle (ϕ) in the reflection plane (RP) in a range from 35 to 44 degrees, preferably in a range from 39 to 43 degrees.

2. Assembly (100) according to claim 1, wherein the display (205) defines a display normal (205N) and the apparatus (300) is arranged to set the display normal (205N) and the mirror normal (303N) at an angle (ψ) to each other in the reflection plane (RP) in a range from 30 to 45 degrees, preferably in a range from 37 to 42 degrees; and/or
wherein the apparatus is arranged to set the display (205) and camera panel (305) at an enclosed angle (ε) in the reflection plane (RP) to each other in a range of 75 to 85 degrees, preferably in a range of 80 to 85 degrees; and/or
wherein the camera panel (305) defines a camera panel plane (CPP) and the blind (301) defines a blind plane (BP), and the apparatus (300) is arranged set the enclosed angle (κ) between the camera panel plane (CPP) and the blind plane (BP) in the reflection plane (RP) in a range of about 5-20 degrees, preferably about 7-18 degrees, and/or
wherein the imaging axis (IA) extends at an enclosed angle to a camera panel normal (305N) in the reflection plane (RP) in a range of 1-5 degrees towards the display (205).

3. An assembly (100) for videoconferencing comprising a display (205), a camera (307) and an apparatus (300) removably mounted to the display (205) and in turn comprising
a blind (301),
a semi-transparent mirror (303), and
a camera panel (305) determining a camera position (CP) and an imaging axis (IA) of the camera (307), in particular comprising the camera (307) and/or comprising a mount for mounting the camera (307) to the camera position (CP) and determining the imaging axis (IA);
wherein in the apparatus (300) the blind (301), the mirror (303), and the camera panel (305) are arranged in a general Z-shape such that an imaging path (IP) is defined along the imaging axis (IA) and a reflection thereof by the mirror (303) in a direction away from the display (205) in a reflection plane (RP), for, in use and comprising the camera (307) mounted to the camera position (CP) and imaging axis (IA) in the assembly (100), simultaneous viewing the display (205) along a viewing path through the mirror (303) by a user (P) and imaging the user (P) by the camera (307) along the imaging path (IP) wherein the viewing path (VP) and imaging path (IP) preferably generally coincide on one side of the mirror (303),
in particular an assembly (100) according to any preceding claim,
wherein the apparatus (300), at least when removed from the display (205), is foldable, the blind (301), mirror (303), and camera panel (305) being foldable with respect to each other, in particular being foldable about vertices of the Z-shape and/or being foldable flat onto each other.

4. Assembly (100) according to claim 3, wherein at least one of the blind (301) and the camera panel (305) is provided with a foldable portion (313) for covering the mirror (303) in a folded state of the apparatus (300).

5. Assembly (100) according to any preceding claim, wherein the mirror (303) has an end configured to be, in use, closest to the display (205), wherein the camera panel (305) has a camera panel length relative to the end of the mirror (303), and wherein the camera position (CP) is located along the reflection plane (RP) at a position in a range from 45 to 60% of the camera panel length, preferably in a range of 50 to 55% of the camera panel length relative to the end of the mirror (303) and/or wherein the imaging axis (IA) is arranged to be incident on the mirror (303) at a reflection position (RF) along the reflection plane (RP) at a position in a range from 45 to 60% of the mirror length, preferably in a range of 50 to 55% of the mirror length relative to the end of the mirror (303).

6. Assembly (100) according to any preceding claim wherein the assembly (100) comprises a computer (200), in particular a laptop computer (200) providing the display (205).

7. Assembly (100) according to any preceding claim, wherein the apparatus (300) comprises one or more side blinds (315) between the blind (301) and the mirror (303), the side blinds (315) preferably defining a relative position and/or orientation of the mirror (303) and the blind (301), e.g. defining an enclosed angle between the blind (301) and the mirror (303) in the reflection plane (RP), and/or the side blinds (315) preferably defining a relative position and/or orientation of the mirror (303) and the display (205) in the assembly (100), e.g. defining an enclosed angle between the mirror (303) and the display (205) in the reflection plane (RP).

8. Assembly (100) according to any preceding claim, wherein the apparatus (300) comprises a camera (307) and at least one connector (310) for interconnecting the camera (307) with the display (205) and/or a processor connected with the display (205), and/or wherein the apparatus (300) comprises a camera (307) and a connector and/or cable for connecting the camera with the display (205) and/or with a processor connected with the display (205).

9. Apparatus (300) for videoconferencing, in particular for use in the assembly (100) according to any preceding claim, configured for removably attaching to a computer display (205) and comprising:
a blind (301),
a semi-transparent mirror (303), and
a camera panel (305)
comprising a mount for mounting a camera (307) to a camera position and imaging axis and/or
comprising a camera (307) mounted to the camera position and imaging axis;
wherein the blind (301), mirror (303), and camera panel (305) are connected in a general Z-shape such that an imaging path (IP) is defined along the imaging axis (IA) and a reflection thereof by the mirror (303) in a reflection plane, for, in use and comprising the camera (307) mounted to the particular camera position and imaging axis (IA), simultaneous viewing a display (205) along a viewing path through the mirror (303) by a user (P) and imaging the user (P) by the camera (307) along the imaging path (IP), wherein the viewing path and imaging path (IP) generally coincide on one side of the mirror (303); and
wherein the mirror (303) has a normal (303N) and the apparatus (300) is arranged to set the mirror normal (303N) and the imaging axis (IA) at an angle (ϕ) to each other in the reflection plane in a range from 35 to 44 degrees, preferably in a range from 39 to 42 degrees, and/or
the camera panel (305) defines a camera panel plane (CPP) and the blind (301) defines a blind plane (BP), and the apparatus (300) is arranged to set the enclosed angle (κ) between the camera panel plane (CPP) and the blind plane (BP) in the reflection plane (RP) in a range of about 5-20 degrees, preferably about 7-18 degrees.

10. Apparatus (300) for videoconferencing, in particular for use in the assembly (100) according to any preceding claim, configured for removably attaching the apparatus (300) to a computer display (205), and comprising
a blind (301),
a semi-transparent mirror (303) defining a mirror normal (303N), and
a camera panel (305)
comprising a mount for mounting a camera (307) to a camera position (CP) and imaging axis (IA) and/or
comprising a camera (307) mounted to the camera position (CP) and imaging axis (IA);
wherein the blind (301), mirror (303), and camera panel (305) are connected in a general Z-shape such that an imaging path (IP) is defined along the imaging axis (IA) and a reflection thereof by the mirror (303) in a reflection plane, for, in use and comprising the camera (307) mounted to the particular camera position (CP) and imaging axis (IA), simultaneous viewing a display (205) along a viewing path through the mirror (303) by a user (P) and imaging the user (P) by the camera (307) along the imaging path (IP), wherein the viewing path and imaging path (IP) generally coincide on one side of the mirror (303),
in particular an apparatus (300) according to any one of claims 9-10,
wherein the blind (301), mirror (303), and camera panel (305) are foldable with respect to each other, in particular being foldable about vertices of the Z-shape and/or being foldable flat onto each other, wherein the apparatus (300) may comprise one or more closures for maintaining and/or securing the folded configuration.

11. Apparatus (300) according to any one of claims 9-10, wherein at least one of the blind (301) and the camera panel (305) is provided with a foldable portion (313) for covering the mirror (303) in a folded state of the apparatus (300).

12. Apparatus (300) according to any one of claims 9-11, wherein the mirror (303) has an end configured to be, in use, closest to the display (205), wherein the camera panel (305) has a camera panel length relative to the end of the mirror (303), and wherein the camera position (CP) is located along the reflection plane (RP) at a position in a range from 45 to 60% of the camera panel length, preferably in a range of 50 to 55% of the camera panel length relative to the end of the mirror (303) and/or wherein the imaging axis (IA) is arranged to be incident on the mirror (303) at a reflection position (RF) along the reflection plane (RP) at a position in a range from 45 to 60% of the mirror length, preferably in a range of 50 to 55% of the mirror length relative to the end of the mirror (303).

13. Apparatus (300) according to any one of claims 9-12, wherein the apparatus (300) comprises one or more side blinds (315) between the blind (301) and the mirror (303), the side blinds (315) preferably defining a relative position and/or orientation of the mirror (303) and the blind (301), e.g. defining an enclosed angle in the reflection plan (RP)between the blind (301) and the mirror (303).

14. Apparatus (300) according to any one of claims 9-13, wherein the apparatus (300) comprises a camera and preferably one or more connectors (310) and/or cables for interconnecting the camera (307) with the display (205) and/or with a processor connected with the display (205).

15. Apparatus (300) according to any one of claims 9-14, wherein one or more of
the camera lens or lenses is (are) arranged in or below a top surface of the camera panel (305S);
the imaging axis (IA) extends at an enclosed angle to a camera panel normal (305N) in the reflection plane (RP) in a range of 1-5 degrees towards an end of the camera panel (305) configured to be, in use, closest to the display (205);
.in use the camera (307) has a field of view about the image axis (IA) spanned by the blind (301);
the camera (307) has a field of view having a generally rectangular cross section about the image axis (IA), preferably having an aspect ratio (width:height) in a range of 4:3 to 16:9, and/or preferably with a vertical field of view in a range of 31 to 50 degrees;
the apparatus (300) comprises a visual camera lens indicator and/or image path indicator;
the camera mount is integrated in the camera panel (305), e.g. comprising a mobile telephone mount and/or webcam mount and/or the imaging axis (IA) is oriented normal to the camera panel (305);
the camera mount is position-adjustable relative to the camera panel (305), in particular along the panel (305);
the apparatus (300) comprises one or more microphones and/or speakers and/or light sources, possibly generally directed toward a user direction and/or directed toward a keyboard;
the apparatus (300) comprises plural connectors interconnected to each other and is formed as a hub between the connectors; and
the apparatus (300) comprises a retracting mechanism coupled to the cable for extending the cable when the apparatus is in use and for retracting the cable into or onto the apparatus (300) when the apparatus is not in use.
